# EUROPÄISCHE PATENTSCHRIFT

(11) **EP 3 581 823 B1**
(45) Veröffentlichungstag und Bekanntmachung des Hinweises auf die Patenterteilung: **07.12.2022**
(21) Anmeldenummer: 19174676.7
(22) Anmeldetag: 15.05.2019
(51) Int. Cl.: F16D 59/00, B60T 7/12

(54) **BREMSSYSTEM FÜR EIN ARBEITSFAHRZEUG UND VERFAHREN DAFÜR**
BRAKING SYSTEM FOR A WORK VEHICLE AND METHOD FOR SAME
SYSTÈME DE FREINAGE POUR UN VÉHICULE DE TRAVAIL ET PROCÉDÉ CORRESPONDANT

(30) Priorität: 18.05.2018 DE 102018112042
(43) Veröffentlichungstag der Anmeldung: 18.12.2019
(73) Patentinhaber: Wacker Neuson Linz GmbH, 4063 Hörsching (AT)
(72) Erfinder: Farthofer, Dieter, 4052 Ansfelden (AT); Rohatsch, Stefan, 4540 Bad Hall (AT)
(74) Vertreter: Müller Hoffmann & Partner

(56) Entgegenhaltungen:
- EP-A2- 0 719 684
- DE-A1-102010 018 329
- DE-A1-102011 117 701
- DE-A1-102015 213 829
- DE-C1- 19 838 773
- DE-U1-202013 005 826

## Beschreibung

Die Erfindung betrifft ein Bremssystem für ein Arbeitsfahrzeug und ein Verfahren dafür.

Derartige Arbeitsfahrzeuge sind typischerweise zwei- oder mehrachsige Radfahrzeuge. Hierzu gehören zum Beispiel Lader, insbesondere Radlader, Telelader oder Kompaktlader, sowie Dumper (Muldenfahrzeuge) oder Bagger.

Die Arbeitsfahrzeuge weisen insbesondere eine Betriebsbremse, zum Beispiel eine Fußbremse auf, über die der Fahrer im normalen Betrieb die Bremswirkung über ein Bremspedal dosieren kann. Darüber hinaus muss bei derartigen Arbeitsfahrzeugen eine Parkbremse, zum Beispiel eine von Hand schaltbare Handbremse oder Feststellbremse, vorgesehen sein, damit das Fahrzeug im Stillstand gegen ein Wegrollen gesichert ist, und zwar auch dann, wenn sich der Fahrer vom Fahrzeug entfernt. Die Betriebsbremse dient somit zum dosierten Bremsen des Fahrzeugs über einen längeren (oder auch kürzeren) Zeitraum, insbesondere aus einer höheren Geschwindigkeit. Die Parkbremse hingegen dient dazu, das Fahrzeug im Stillstand festzuhalten und ein ungewolltes Wegfahren zu verhindern.

Die Parkbremse erfordert bei Arbeitsfahrzeugen nach dem Stand der Technik eine manuelle Betätigung durch den Fahrer, zum Beispiel durch Drücken eines Schalters, Betätigen eines Hebels etc.

Typisch für den Betrieb derartiger Arbeitsfahrzeuge ist es, dass der Fahrer auch bei laufendem Motor das Fahrzeug verlässt, um bestimmte Arbeitshandlungen vorzunehmen. Das Fahrzeug steht dann unter Umständen minutenlang mit im Leerlauf laufendem Motor. Dabei muss ein unerwünschtes Losrollen des Fahrzeugs vermieden werden. Eine entsprechende Gefahr besteht insbesondere dann, wenn das Arbeitsfahrzeug nicht exakt in einer Ebene steht. Hier kann es passieren, dass der Fahrer in der Annahme, die Parkbremse betätigt zu haben, das Fahrzeug verlässt, während das Fahrzeug stillsteht. Wenn in dieser Situation die Parkbremse jedoch nicht betätigt wurde, kann das Fahrzeug jederzeit losrollen, was zu einer Gefährdung der Umgebung führt. Diese Gefahr wird noch dadurch erhöht, dass sich aufgrund der mitunter starken Vibrationen des Motors (häufig ein Dieselmotor) erst nach einiger Zeit eine Bewegung des Fahrzeugs einstellt. Zudem sind derartige Fahrzeuge häufig hydrostatisch angetrieben, so dass der Hydromotor ein Bremsmoment aufbringt. Dies kann ebenfalls zu einer Verzögerung der Bewegung führen, so dass sich ein Bediener vielleicht schon vom Fahrzeug entfernt hat und nicht mehr eingreifen kann.

Aus der DE 198 38 773 C1 ist eine Bremseinrichtung für eine Arbeitsmaschine bekannt, mit einer Betriebsbremse, einer Parkbremse und einer Blockiereinrichtung für eine Pendelachse der Arbeitsmaschine. Dazu ist eine automatische Steuereinheit vorgesehen, welche verschiedene Fahrzustände der Arbeitsmaschine erfasst und ein gleichzeitiges Betätigen der Betriebsbremse, der Parkbremse und der Blockiereinrichtung veranlasst, wenn die Fahrzustände vorgebbare Bedingungen erfüllen. Eine Bedingung ist insbesondere "Fahrpedal: aus" und "Geschwindigkeitssensor: Null". Eine andere Bedingung ist "Vorwärtsschalter: aus", "Rückwärtsschalter: aus" und "Geschwindigkeitssensor: Null". Wiederum eine andere Bedingung umfasst "Bremspedalschalter: ein" und "Geschwindigkeitssensor: Null". Grundlage aller Bedingungen ist es somit, dass die Arbeitsmaschine stillsteht und der Geschwindigkeitssensor "Null" anzeigt.

Daher liegt der Erfindung die Aufgabe zugrunde, ein Arbeitsfahrzeug anzugeben, das nicht unerwünscht bzw. unkontrolliert losrollen kann.

Die Aufgabe wird erfindungsgemäß durch ein Arbeitsfahrzeug mit einem Bremssystem mit den Merkmalen von Anspruch 1 gelöst. Ein Verfahren zum automatischen Aktivieren einer Parkbremseinrichtung in einem Arbeitsfahrzeug wird in dem nebengeordneten Anspruch angegeben. Vorteilhafte Ausgestaltungen sind in den abhängigen Ansprüchen definiert.

Es wird ein Arbeitsfahrzeug mit einem Bremssystem angegeben, mit einem Motor, dessen Drehzahl über ein Fahrpedal veränderbar ist, einer Parkbremseinrichtung und mit einer Bremssteuerung zum Betätigen der Parkbremseinrichtung. Die Bremssteuerung ist ausgebildet zum automatischen Aktivieren der Parkbremseinrichtung, wenn wenigstens eine der folgenden Bedingungen erfüllt ist:
- das Fahrpedal wird über einen vorbestimmten Inaktivitätszeitraum nicht betätigt und eine Fahrgeschwindigkeit des Arbeitsfahrzeugs liegt unterhalb eines vorgegebenen Geschwindigkeitsgrenzwertes;
- ein Fahrtrichtungsschalter ist in eine Stellung "neutral" eingelegt und die Fahrgeschwindigkeit liegt unterhalb eines vorgegebenen Geschwindigkeitsgrenzwertes;
- die Fahrgeschwindigkeit ist Null und erhöht sich nachfolgend, ohne dass das Fahrpedal betätigt wird;
- die Fahrgeschwindigkeit ist Null und eine Betriebsbremse ist durch einen Fahrer aktiviert;
- die Fahrgeschwindigkeit ist Null und es ist eine Abwesenheit des Fahrers von einem Fahrersitz feststellbar.

Sofern von einer Fahrgeschwindigkeit von Null gesprochen wird, handelt es sich um eine Geschwindigkeit, die hinreichend gering ist, um den Fahrer annehmen zu lassen, dass das Fahrzeug steht. Bei großen Fahrzeugen kann es vom Fahrzeugsitz schwer zu erkennen sein, ob ein Fahrzeug noch sehr geringfügig rollt oder schon steht. Die Geschwindigkeit von Null ist deshalb so zu verstehen, dass das Fahrzeug den Eindruck vermittelt es würde still stehen, was bei einer Geschwindigkeit von 3 km/h und darunter, insbesondere von 1 km/h und darunter der Fall ist.

Bei dem Arbeitsfahrzeug kann es sich insbesondere um ein zwei- oder mehrachsiger Radfahrzeug wie einen Lader, einen Bagger oder einem Dumper handeln.

Der Motor ist üblicherweise als Dieselmotor ausgeführt. Mit Hilfe des Fahrpedals (Gaspedal) kann der Bediener die Motordrehzahl und -leistung verändern.

Die Parkbremseinrichtung ist in geeigneter Weise in dem Arbeitsfahrzeug vorgesehen. Insbesondere kann die Parkbremseinrichtung eine Parkbremse aufweisen, die an einer gebremsten Vorder- oder Hinterachse des Arbeitsfahrzeugs angebaut ist. Ebenso ist es möglich, auch mehrere Achsen, zum Beispiel die Vorderachse und die Hinterachse, mit jeweils einer oder mehreren Parkbremsen auszustatten, die dann insgesamt Bestandteil der Parkbremseinrichtung sind.

Die Bremssteuerung ist ausgebildet, um die Erfüllung bestimmter Bedingungen zu überprüfen bzw. anhand von vordefinierten Kriterien festzustellen, ob eine automatische Aktivierung der Parkbremseinrichtung veranlasst ist. Wenn eine der Bedingungen erfüllt ist und die entsprechenden Kriterien vorliegen, kann die Bremssteuerung automatisch die Parkbremseinrichtung aktivieren und dadurch ein unerwünschtes Wegrollen des Arbeitsfahrzeugs verhindern, ohne dass der Fahrer selbst aktiv die Parkbremseinrichtung zuschaltet.

Eine der oben genannten Bedingungen ist es, dass das Fahrpedal über einen vorbestimmten Inaktivitätszeitraum nicht betätigt wird und eine Fahrgeschwindigkeit des Arbeitsfahrzeugs unterhalb eines vorgegebenen Geschwindigkeitsgrenzwertes liegt. Das bedeutet, dass der Fahrer bzw. Bediener des Arbeitsfahrzeugs keine Betätigung des Fahrpedals über den genannten Inaktivitätszeitraum vornimmt, mithin also keine Fahrbewegung des Arbeitsfahrzeugs wünscht. Teil der Bedingung ist es auch, dass die Fahrgeschwindigkeit unterhalb des vorgegebenen Geschwindigkeitsgrenzwertes liegt, also verhältnismäßig niedrig ist. Hier kann zum Beispiel ein Geschwindigkeitsgrenzwert gewählt werden, der einer Schrittgeschwindigkeit oder weniger entspricht. Wenn also die Bremssteuerung feststellt, dass der Fahrer das Fahrpedal über einen bestimmten Zeitraum nicht betätigt hat, und gleichzeitig die Fahrgeschwindigkeit sehr niedrig ist bzw. das Arbeitsfahrzeug stillsteht, aktiviert die Bremssteuerung automatisch die Parkbremseinrichtung.

Gemäß einer anderen der oben genannten Bedingungen muss festgestellt werden, dass ein Fahrtrichtungsschalter in eine Stellung "Neutral" eingelegt ist und dass die Fahrgeschwindigkeit unterhalb eines vorgegebenen Geschwindigkeitsgrenzwertes liegt. In diesem Fall wird aus der Neutral-Stellung des Fahrtrichtungsschalters geschlossen, dass der Fahrer derzeit keinen Fahrtwunsch für das Arbeitsfahrzeug hat. Wenn gleichzeitig die Geschwindigkeit sehr niedrig ist bzw. das Arbeitsfahrzeug steht, gilt die Bedingung als erfüllt, so dass die Bremssteuerung die Parkbremseinrichtung aktivieren kann.

Bei einer anderen Bedingung muss festgestellt werden, dass die Fahrgeschwindigkeit Null ist und sich nachfolgend erhöht, ohne dass das Fahrpedal betätigt wird. Die Bremssteuerung hat folglich zunächst den Stillstand des Arbeitsfahrzeugs festzustellen und danach eine Zunahme der Fahrgeschwindigkeit. Wenn dabei das Fahrpedal nicht betätigt wird, leitet die Bremssteuerung daraus ab, dass kein Wunsch des Fahrers vorliegt, das Arbeitsfahrzeug in Bewegung zu versetzen. Vielmehr wird angenommen, dass die nachfolgende Geschwindigkeitssteigerung einem unerwünschten Losrollen des Arbeitsfahrzeugs entspricht. In diesem Fall kann die Bremssteuerung die Parkbremseinrichtung aktivieren und ein Weiterrollen des Arbeitsfahrzeugs verhindern.

Bei einer weiteren Bedingung ist es vorgesehen, dass die Fahrgeschwindigkeit Null sein soll (Stillstand des Arbeitsfahrzeugs) und eine Betriebsbremse durch den Fahrer aktiviert ist. Die Aktivierung der Betriebsbremse erfolgt in der Regel durch Betätigen eines Bremspedals, welches die Betriebsbremse in bekannter Weise beaufschlagt. Die Bremssteuerung kann somit feststellen, dass sich das Fahrzeug im Stillstand befindet und dass dieser Zustand auch so vom Fahrer gewünscht ist, da er die Betriebsbremse aktiviert. In diesem Fall aktiviert die Bremssteuerung ihrerseits die Parkbremseinrichtung, um ein Halten des Arbeitsfahrzeugs sicherzustellen. Der Fahrer kann dann zum Beispiel den Fuß vom Bremspedal nehmen, ohne dass die Gefahr eines Losrollens des Arbeitsfahrzeugs besteht. Erst mit weiteren Aktivitäten, zum Beispiel dem Einlegen des Fahrtrichtungsschalters in die Stellung "Vorwärts" oder "Rückwärts" oder durch Betätigen des Fahrpedals kann ein Fahrtwunsch des Bedieners erkannt werden, woraufhin die Aktivierung der Parkbremseinrichtung durch die Bremssteuerung aufgehoben werden kann.

Bei einer weiteren Bedingung muss die Fahrgeschwindigkeit Null sein, wobei eine Abwesenheit des Fahrers von einem Fahrersitz feststellbar ist. Hierbei wird unterstellt, dass ein sicherer Betrieb des Arbeitsfahrzeugs nur dann gewährleistet ist, wenn der Fahrer auf dem Fahrersitz sitzt und die entsprechenden Bedienelemente gut erreichen kann. Wenn er jedoch den Fahrersitz verlassen hat, muss ein Losfahren bzw. Losrollen des Arbeitsfahrzeugs unterbunden werden. Die Bremssteuerung kann dementsprechend die Parkbremseinrichtung aktivieren.

Zum Bestimmen, ob das Fahrpedal betätigt oder nicht betätigt ist, kann eine Fahrpedalstellung-Erfassungseinrichtung vorgesehen sein, zum Erfassen der Stellung des Fahrpedals in einer Ausgangsstellung und/oder zum Erfassen einer Änderung einer Stellung des Fahrpedals. Die Fahrpedalstellung-Erfassungseinrichtung kann mit der Bremssteuerung gekoppelt sein, zum Erzeugen eines Fahrpedalsignals, wenn eine Änderung der Fahrpedalstellung festgestellt wird.

Auf diese Weise kann der Bremssteuerung die erforderliche Information über den Zustand des Fahrpedals und insbesondere über eine Betätigung des Fahrpedals zugeführt werden. Die Bremssteuerung kann somit ausgebildet sein, eine Inaktivität des Fahrpedals über einen bestimmten Inaktivitätszeitraum festzustellen und dann - gegebenenfalls unter Berücksichtigung weiterer Kriterien - die Erfüllung der oben genannten Bedingungen zu überprüfen.

Es kann eine Geschwindigkeitsmesseinrichtung zum Messen der Fahrgeschwindigkeit des Arbeitsfahrzeugs vorgesehen sein. Dabei kann zum Beispiel die Drehzahl eines oder mehrerer der Räder des Arbeitsfahrzeugs überwacht werden, um daraus Rückschlüsse auf die Fahrgeschwindigkeit zu ziehen. Ebenso ist es möglich, mit Hilfe einer GPS-Auswertung bzw. einer Satellitennavigation zu erkennen, ob sich das Arbeitsfahrzeug bewegt. Ebenso sind weitere Möglichkeiten denkbar, mit deren Hilfe eine Geschwindigkeit des Arbeitsfahrzeugs ermittelt werden kann.

Die Geschwindigkeitsmesseinrichtung kann mit der Bremssteuerung gekoppelt sein, zum Übermitteln eines Geschwindigkeitssignals, wobei die Bremssteuerung ausgebildet sein kann, zum Bestimmen, ob die Fahrgeschwindigkeit des Arbeitsfahrzeugs unterhalb eines vorgegebenen Geschwindigkeitsgrenzwertes liegt, und/oder ob die Fahrgeschwindigkeit Null ist, und/oder ob die Fahrgeschwindigkeit zunächst Null ist und sich nachfolgend erhöht.

Eine derartige Auswertung der aktuell von der Geschwindigkeitsmesseinrichtung erfassten Fahrgeschwindigkeit des Arbeitsfahrzeugs erlaubt der Bremssteuerung Rückschlüsse darauf, ob eine der oben genannten Bedingungen erfüllt ist. Dabei ist es ohne weiteres auch möglich, dass mehrere der genannten Bedingungen erfüllt sind. Es genügt jedoch, dass auch nur eine Bedingung erfüllt ist, um eine Aktivierung der Parkbremseinrichtung herbeizuführen.

Der Fahrtrichtungsschalter kann vorgesehen sein zum Einstellen von wenigstens drei Fahrtrichtungen, nämlich "Vorwärts", "Rückwärts" und "Neutral", wobei ein Fahrtrichtungs-Informationssignal über die eingestellte Fahrtrichtung an die Bremssteuerung übermittelbar sein kann.

Der Fahrtrichtungsschalter kann somit mit der Bremssteuerung gekoppelt sein, um eine Information zu übermitteln, wenn der Fahrtrichtungsschalter in der Stellung "Neutral" steht. Dieses Kriterium ist relevant für eine der oben genannten Bedingungen. Wenn dann nämlich auch festgestellt wird, dass die Fahrgeschwindigkeit unterhalb eines vorgegebenen Geschwindigkeitsgrenzwertes liegt, kann die Bremssteuerung die Parkbremseinrichtung aktivieren.

Wenn hingegen festgestellt wird, dass der Fahrtrichtungsschalter in der Stellung "Vorwärts" oder "Rückwärts" steht, ist ein Aktivieren der Parkbremseinrichtung nicht sinnvoll. Die Bremssteuerung kann dazu ausgebildet sein, um die Parkbremseinrichtung zu lösen, wenn nach einer automatischen Aktivierung der Parkbremseinrichtung durch die Bremssteuerung eine Änderung der Fahrtrichtung durch den Fahrtrichtungsschalter in Fahrtrichtung "Vorwärts" oder "Rückwärts" erkannt wird.

Es kann ein Bremspedal vorgesehen sein, zum Aktivieren der Betriebsbremse durch den Fahrer. Die Bremssteuerung kann mit dem Bremspedal in geeigneter Weise gekoppelt sein, um eine Information über eine Betätigung des Bremspedals bzw. eine Aktivierung der Betriebsbremse zu erhalten und dadurch die entsprechende Bedingung auszuwerten. Zu diesem Zweck kann an dem Bremspedal oder an geeigneter Stelle in der Wirkverbindung zwischen Bremspedal und Betriebsbremse eine entsprechende Erkennungseinrichtung vorgesehen sein, zum Beispiel ein Sensor, der eine Bewegung des Bremspedals oder eine Kraftausübung feststellt.

Es kann ein Fahrersitz vorgesehen sein, mit einer Sitzkontakteinrichtung zum Erkennen einer Abwesenheit des Fahrers von dem Fahrersitz. Der Sitzkontaktschalter öffnet und schließt, je nachdem, ob ein Fahrer auf dem Fahrersitz Platz genommen hat oder nicht. Wenn der Sitzkontaktschalter geöffnet ist, wird dies als Hinweis darauf genommen, dass der Fahrer nicht auf dem Fahrersitz sitzt, so dass auf diese Weise eine Abwesenheit des Fahrers von dem Fahrersitz feststellbar ist.

Durch Kopplung der Sitzkontakteinrichtung mit der Bremssteuerung ist es möglich, eine entsprechende Information an die Bremssteuerung zu übermitteln, so dass die Bremssteuerung die entsprechende Bedingung bezüglich der Abwesenheit des Fahrers vom Fahrersitz überprüfen kann. Wenn der Fahrer nicht auf dem Fahrersitz sitzt, ist es zweckmäßig, die Parkbremse durch die Bremssteuerung automatisch zu aktivieren.

Es kann eine Parkbrems-Betätigungseinrichtung für den Fahrer des Arbeitsfahrzeugs vorgesehen sein, zum Aktivieren und Lösen der Parkbremseinrichtung durch eine Betätigungshandlung des Fahrers. Der Fahrer hat damit die Möglichkeit, unabhängig von der automatischen Wirkung der Bremssteuerung auch eigenständig die Parkbremseinrichtung zu aktivieren (festzustellen) oder zu lösen. Der Fahrer kann auf diese Weise jederzeit die Wirkung der Bremssteuerung überstimmen. Die automatische Aktivierung der Bremse bleibt in diesem Fall solange deaktiviert, bis das Fahrzeug erneut zum Stillstand kommt.

Sinnvollerweise kann die Bremssteuerung eine Information erhalten, wenn der Fahrer die Parkbremseinrichtung bereits eigenständig aktiviert oder gelöst hat.

Insbesondere kann die Bremssteuerung ausgebildet sein, um eine durch den Fahrer mit Hilfe der Parkbrems-Betätigungseinrichtung aktivierte Parkbremseinrichtung nicht automatisch durch die Bremssteuerung zu lösen. Die Bremssteuerung sollte daher derart ausgebildet sein, dass sie nur eine von ihr selbst gesetzte Aktivierung der Parkbremse rückgängig machen kann, nicht aber eine Aktivierung der Parkbremse, die der Fahrer vorgenommen hat.

Bei einer Variante kann die Bremssteuerung jedoch immer dann die Parkbremse lösen, wenn ein Fahrwunsch des Fahrers klar erkennbar ist, also er zum Beispiel den Fahrtrichtungsschalter in Fahrtrichtung "Vorwärts" oder "Rückwärts" gestellt hat und das Fahrpedal betätigt.

Es wird ein Verfahren zum automatischen Aktivieren einer Parkbremseinrichtung in einem Arbeitsfahrzeug angegeben, mit den Schritten:
- Überwachen von Bedingungen aufgrund von Zuständen des Arbeitsfahrzeugs und automatisches Aktivieren der Parkbremseinrichtung, wenn wenigstens eines der folgenden Bedingungen erfüllt ist:
   + ein Fahrpedal wird über einen vorbestimmten Inaktivitätszeitraum nicht betätigt und eine Fahrgeschwindigkeit des Arbeitsfahrzeugs liegt unterhalb eines vorgegebenen Geschwindigkeitsgrenzwertes;
   + ein Fahrtrichtungsschalter ist in eine Stellung "neutral" eingelegt und die Fahrgeschwindigkeit liegt unterhalb eines vorgegebenen Geschwindigkeitsgrenzwertes;
   + die Fahrgeschwindigkeit ist Null und erhöht sich nachfolgend, ohne dass das Fahrpedal betätigt wird;
   + die Fahrgeschwindigkeit ist Null und eine Betriebsbremse ist durch einen Fahrer aktiviert;
   + die Fahrgeschwindigkeit ist Null und eine Abwesenheit des Fahrers von einem Fahrersitz ist feststellbar.

Diese und weitere Vorteile und Merkmale werden nachfolgend anhand eines Beispiels unter Zuhilfenahme der begleitenden Figuren näher erläutert. Es zeigen:
- **Fig. 1**: in schematischer Darstellung eines Arbeitsfahrzeugs mit einem Bremssystem;
- **Fig. 2**: einen schematischen Aufbau einer Parkbremseinrichtung.

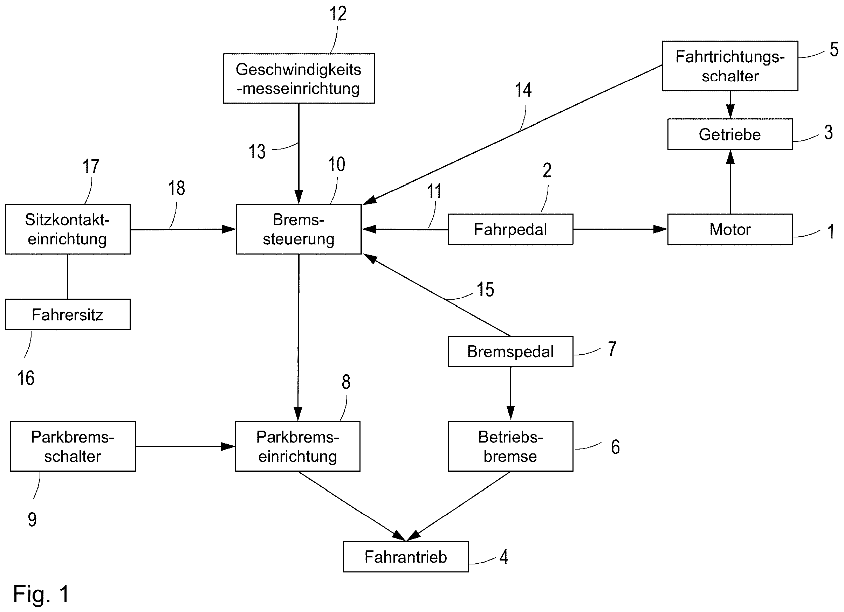

Fig. 1 zeigt in schematischer Darstellung den für das hier in Rede stehende Bremssystem relevanten Teil eines Arbeitsfahrzeugs.

Es ist ein Motor 1 vorgesehen, dessen Drehzahl durch den Bediener über ein Fahrpedal 2 in an sich bekannter Weise verändert werden kann. Anstelle des Fahrpedals 2 könnte auch eine andere Bedieneinrichtung vorgesehen sein, über die der Bediener die Motordrehzahl verändern kann. Der Motor 1 treibt über ein Getriebe 3 einen Fahrantrieb 4 an. Die Verbindung zwischen Motor 1, Getriebe 3 und Fahrantrieb 4 ist in Fig. 1 nur rudimentär dargestellt. Der Motor 1 kann als Dieselmotor ausgeführt werden, der über das Getriebe 3 eine oder zwei Achsen (zum Beispiel Vorderachse und Hinterachse) des Fahrantriebs 4 antreibt. Ebenso kann das Getriebe 3 auch als Hydraulikantrieb (hydrostatischer Antrieb) ausgeführt werden, bei dem der Motor 1 einen Hydraulikkreislauf mit Hilfe einer Hydraulikpumpe betreibt, während die einzelnen Räder mit Hilfe von Hydromotoren angetrieben werden. Alternativ kann auch ein einzelner Hydromotor genutzt werden, der z.B. am Differential einer Achse positioniert ist und/oder dessen Drehmoment mit einer oder mehreren Gelenkwellen übertragen wird.

Der Bediener kann mit Hilfe eines Fahrtrichtungsschalters 5 das Getriebe 3 schalten und insbesondere die Fahrtrichtungen "Vorwärts", "Rückwärts" und "Neutral" wählen.

Die Fahrgeschwindigkeit des Arbeitsfahrzeugs kann in bekannter Weise durch eine Betriebsbremse 6 verringert werden, die der Fahrer mit Hilfe eines Bremspedals 7 betätigen kann. Die Betriebsbremse 6 weist insbesondere Bremskomponenten auf, die zum Beispiel an den einzelnen (nicht dargestellten) Rädern des Arbeitsfahrzeugs oder an einer oder mehreren Achsen des Arbeitsfahrzeugs vorgesehen sind. Üblicherweise handelt es sich dabei um Reibungsbremsen, die in entsprechender Zahl an dem Arbeitsfahrzeug vorgesehen sind.

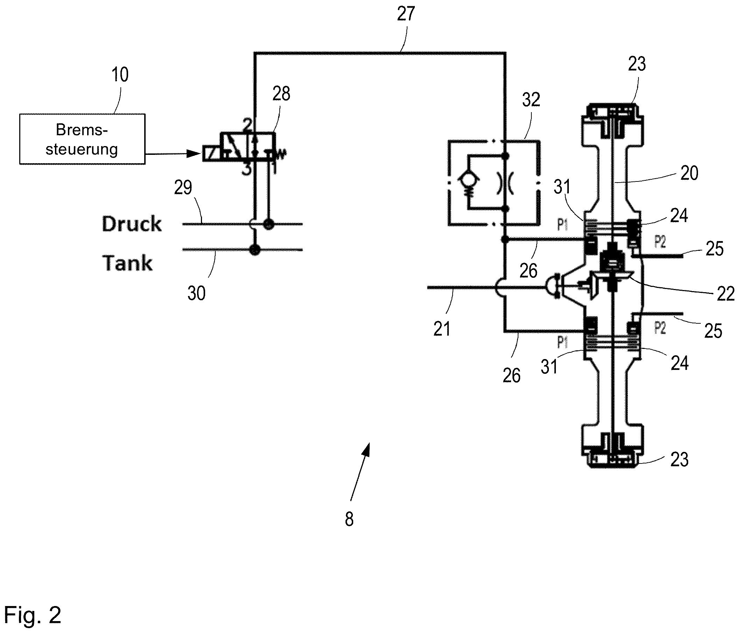

Weiterhin ist eine Parkbremseinrichtung 8 vorgesehen, die üblicherweise als Hand- oder Feststellbremse dient. Der Aufbau der Parkbremseinrichtung 8 wird später noch in Verbindung mit Fig. 2 näher erläutert.

Die Parkbremseinrichtung 8 kann insbesondere durch den Bediener mit Hilfe eines als Parkbrems-Betätigungseinrichtung dienenden Parkbremsschalters 9 aktiviert werden. Die Parkbrems-Betätigungseinrichtung kann auch als Parkbremshebel, -taster o.ä. ausgeführt sein.

Ein wesentliches Element des Bremssystems ist eine als Parkbremssteuerung ausgeführte Bremssteuerung 10. Die Bremssteuerung 10 dient dazu, bestimmte Kriterien bzw. Betriebszustände des Arbeitsfahrzeugs auszuwerten und zu überprüfen, ob vorgegebene Bedingungen erfüllt sind. Wenn wenigstens eine der vordefinierten Bedingungen erfüllt ist, kann die Bremssteuerung 10 die Parkbremseinrichtung 8 automatisch aktivieren und damit ein unerwünschtes Wegrollen des Arbeitsfahrzeugs verhindern.

Für die Auswertung der genannten Kriterien bzw. Arbeitszustände und nachfolgend Auswertung der vorgegebenen Bedingungen werden der Bremssteuerung 10 entsprechende Informationen zugeführt. Die Bremssteuerung kann auch übergreifend definiert sein und sich ihrerseits die Jeweils nötigen Informationen über Fahrpedalstellung, Fahrgeschwindigkeit etc. ermitteln, wenn sie mit jeweiligen Aufnehmern bzw. Sensoren gekoppelt ist.

So kann die Bremssteuerung 10 ein Fahrpedalsignal 11 von dem mit einer Fahrpedalstellung-Erfassungseinrichtung ausgestatteten Fahrpedal 2 erhalten, zum Erfassen der Stellung des Fahrpedals 2 in einer Ausgangsstellung (Leerlaufstellung) und/oder zum Erfassen einer Änderung einer Stellung des Fahrpedals 2. Die Bremssteuerung 11 kann mit dem Fahrpedal 2 derart gekoppelt sein, dass sie selbst die entsprechende Information aus dem Fahrpedal 2 ausliest. Ziel ist es dabei, eine Information darüber zu erhalten, ob das Fahrpedal 2 vom Bediener/Fahrer betätigt wird oder nicht.

Weiterhin kann eine Geschwindigkeitsmesseinrichtung 12 vorgesehen sein, zum Erfassen der Fahrgeschwindigkeit des Arbeitsfahrzeugs. Die Geschwindigkeitsmesseinrichtung 12 übergibt die Information über die Fahrgeschwindigkeit in Form eines Geschwindigkeitssignals 13 an die Bremssteuerung 10.

Die Bremssteuerung 10 ist damit insbesondere in der Lage festzustellen, ob die Fahrgeschwindigkeit Null ist (Stillstand des Arbeitsfahrzeugs) oder ob sie unterhalb eines vorgegebenen Geschwindigkeitsgrenzwertes liegt.

Weiterhin kann der Bremssteuerung 10 ein Fahrtrichtungs-Informationssignal 14 vom Fahrtrichtungsschalter 5 übermittelt werden. Das Fahrtrichtungs-Informationssignal 14 liefert die Information, ob am Fahrtrichtungsschalter 5 die Fahrtrichtung "Vorwärts", "Rückwärts" oder "Neutral" eingestellt ist, wobei letztere für die gegebenenfalls erwünschte automatische Aktivierung der Parkbremseinrichtung 8 durch die Bremssteuerung 10 von besonderer Bedeutung ist.

Auch von dem Bremspedal 7 bzw. von der Betriebsbremse 6 kann ein Betriebsbremsen-Informationssignal 15 an die Bremssteuerung übergeben werden. Damit erhält die Bremssteuerung 10 die Information, ob der Fahrer die Betriebsbremse aktiviert hat oder nicht.

Weiterhin kann an einem üblicherweise bei einem Arbeitsfahrzeug vorgesehenen Fahrersitz 16 eine Sitzkontakteinrichtung 17 vorgesehen sein, zum Erkennen einer Anwesenheit oder Abwesenheit des Fahrers am Fahrersitz 16. Wenn der Fahrer nicht auf dem Fahrersitz 16 sitzt, kann zum Beispiel die Sitzkontakteinrichtung 17 öffnen und ein entsprechendes Sitzkontaktsignal 18 an die Bremssteuerung 10 liefern.

Die Bremssteuerung 10 ist dazu ausgebildet, die Parkbremseinrichtung 8 automatisch zu aktivieren, wenn wenigstens eine der folgenden Bedingungen erfüllt ist:
- Das Fahrpedal 2 wird über einen vorbestimmten Inaktivitätszeitraum nicht betätigt und eine durch die Geschwindigkeitsmesseinrichtung 12 bestimmte Fahrgeschwindigkeit des Arbeitsfahrzeugs liegt unterhalb eines vorgegebenen Geschwindigkeitsgrenzwertes.
- Der Fahrtrichtungsschalter 5 ist in die Stellung "Neutral" eingelegt und die durch die Geschwindigkeitsmesseinrichtung 12 erfasste Fahrgeschwindigkeit liegt unterhalb eines vorgegebenen Geschwindigkeitsgrenzwertes.
- Die von der Geschwindigkeitsmesseinrichtung 12 gemessene Fahrgeschwindigkeit ist Null (Stillstand des Fahrzeugs) und erhöht sich nachfolgend, ohne dass das Fahrpedal 2 betätigt wird (Fahrzeug rollt los).
- Die Fahrgeschwindigkeit ist Null und die Betriebsbremse 6 wird durch den Fahrer über das Bremspedal 7 aktiviert.
- Die Fahrgeschwindigkeit ist Null und es ist eine Abwesenheit des Fahrers von seinem Fahrersitz 16 mit Hilfe der Sitzkontakteinrichtung 17 feststellbar.

Fig. 2 zeigt in schematischer Darstellung den Aufbau eines Teils der Parkbremseinrichtung 8.

Insbesondere zeigt Fig. 2 beispielhaft eine Vorderachse 20 des Arbeitsfahrzeugs. Die Antriebsleistung des Motors 1 wird über eine Antriebswelle 21 und ein Achsgetriebe 22 auf entsprechend drehbar gelagerte Naben 23 verteilt, auf denen entsprechende, nicht-dargestellte Räder befestigt werden können. Das Achsgetriebe 22 ist als Differentialgetriebe ausgebildet, um die beiden Räder der Vorderachse 20 voneinander zu entkoppeln.

Analog zu der in Fig. 2 dargestellten Vorderachse 20 kann auch eine in der Figur nicht dargestellte Hinterachse aufgebaut sein. Diese kann frei drehbar oder - wie die Vorderachse - angetrieben sein. Ebenso kann sie mit einer geeigneten Bremseinrichtung (Betriebsbremse und/oder Parkbremse) ausgestattet sein.

Zum Bremsen der Vorderachse 20 ist für jede Nabe 23 eine Bremseinrichtung 24 vorgesehen. Die Bremseinrichtungen 24 können als Betriebsbremsen genutzt werden, wobei ihnen dazu über Leitungen 25 ein entsprechender Bremsdruck zur Verfügung gestellt wird. Die Funktion der Betriebsbremse ist jedoch an dieser Stelle nicht von Interesse, so dass deren Darstellung nicht weiter vertieft wird.

Vielmehr befasst sich die Darstellung in Fig. 2 mit der Funktion der Parkbremseinrichtung 8, bei der unter Bremsdruck stehende Bremsflüssigkeit über Bremsleitungen 26 zu den in diesem Fall als Teil der Parkbremseinrichtung 8 dienenden Bremseinrichtungen 24 geführt wird.

Die Bremsleitungen 26 sind Teil eines Feststell-Bremskreises 27 zum Betätigen der Parkbremseinrichtung 8. Der Feststell-Bremskreis 27 weist eine als Feststell-Bedieneinrichtung dienende Schalteinrichtung 28 auf. Die Schalteinrichtung 28 weist in dem in Fig. 2 gezeigten Beispiel ein elektrisch betätigtes 2/3-Wegeventil auf, das federrückgestellt ist. Die Schalteinrichtung 28 kann weiterhin einen elektrischen Taster oder Schalter oder auch einen hydraulischen oder mechanischen Hebel oder Schalter aufweisen, um einem Bediener zu ermöglichen, die Parkbremse zu betätigen. Die Schalteinrichtung 28 ist somit Teil einer Parkbrems-Betätigungseinrichtung.

Ebenso kann die Schalteinrichtung 28 durch die Bremssteuerung 10 automatisch angesteuert werden, um die oben unter Bezugnahme auf Fig. 1 erläuterten Funktionen hinsichtlich einer automatischen Aktivierung der Parkbremseinrichtung 8 zu ermöglichen.

Die Schalteinrichtung 28 ermöglicht es, Druck von einer zu dem Fahrzeug gehörenden Hydraulik-Druckversorgung 29 zu der nachfolgend noch erläuterten Parkbremse zu führen oder den Druck in der Bremsflüssigkeit zu einem Tank 30 abzuführen.

Zu dem Feststell-Bremskreis 27 gehört jeweils eine Federspeicherbremse 31, die der entsprechenden Bremseinrichtung 24 und damit Radnabe 23 zugeordnet ist. Die Federspeicherbremse 31 weist einen in der Figur nicht erkennbaren Kolben auf, der federbeaufschlagt gegen ein Lamellenpaket gedrückt wird. Nur bei Druckbeaufschlagung über den Feststell-Bremskreis 27 und entsprechend anliegender Druckversorgung 29 wird der Kolben in der Federspeicherbremse 31 von dem Lamellenpaket abgehoben und gibt so die Drehung frei. Wenn hingegen kein Druck über den Feststell-Bremskreis 27 anliegt, ist die Federspeicher-Bremse 31 aufgrund der Federvorspannung geschlossen und die Parkbremseinrichtung 8 blockiert ein Drehen der Vorderachse 20.

In der Zuführung zu den Bremsleitungen 26 ist eine Drosselstelle vorgesehen, die im gezeigten Ausführungsbeispiel als Drosselrückschlagventil 32 ausgebildet ist.

Das Drosselrückschlagventil 32 verhindert aufgrund seiner Drosselwirkung einen zu schnellen Druckabfall in dem Feststell-Bremskreis 27 bei Unterbrechen der Druckversorgung 29 bzw. Öffnen der Bremsleitung zum Tank 30. Dadurch ist es möglich, den Bremsvorgang nicht schlagartig sondern etwas verzögert durchzuführen, um ein plötzliches Bremsen des Fahrzeugs zu vermeiden und in allen Betriebszuständen die Standsicherheit zu gewährleisten. Dies kann insbesondere dann komfortabel sein, wenn das Fahrzeug sich noch langsam bewegt, während der Fahrer bereits die Parkbremse bzw. Feststellbremse aktiviert hat.

In umgekehrter Strömungsrichtung wird bei dem Drosselrückschlagventil 32 das Rückschlagventil geöffnet, so dass bei einer Freigabe der Bremse die Bremsen (Federspeicherbremsen 31) ohne Verzögerung mit Bremsdruck beaufschlagt und damit freigegeben werden können.

Alternativ kann die Drosselstelle auch mittels eines anderen geeigneten Mittels gebildet sein, beispielsweise mittels eines Stromregelventils.

## Patentansprüche

1. Arbeitsfahrzeug mit einem Bremssystem, mit
- einem Motor (1), dessen Drehzahl über ein Fahrpedal (2) veränderbar ist;
- einer Parkbremseinrichtung (8) mit wenigstens einer Federspeicherbremse (31);
- einer Bremssteuerung (10) zum Betätigen der Parkbremseinrichtung (8); und mit
- einem Feststell-Bremskreis (27) mit Bremsleitungen (26), über die unter Bremsdruck stehende Bremsflüssigkeit um die Parkbremseinrichtung (8) zu lösen, zu der Parkbremseinrichtung (8) geführt wird;
wobei
- die Bremssteuerung (10) ausgebildet ist zum automatischen Aktivieren der Parkbremseinrichtung (8), wenn wenigstens eine der folgenden Bedingungen erfüllt ist:
- das Fahrpedal (2) wird über einen vorbestimmten Inaktivitätszeitraum nicht betätigt und eine Fahrgeschwindigkeit des Arbeitsfahrzeugs liegt unterhalb eines vorgegebenen Geschwindigkeitsgrenzwertes;
- ein Fahrtrichtungsschalter (5) ist in eine Stellung "Neutral" eingelegt und die Fahrgeschwindigkeit liegt unterhalb eines vorgegebenen Geschwindigkeitsgrenzwertes ;
- die Fahrgeschwindigkeit ist Null und erhöht sich nachfolgend, ohne dass das Fahrpedal (2) betätigt wird;
- die Fahrgeschwindigkeit ist Null und eine Betriebsbremse (6) ist durch einen Fahrer aktiviert;
- die Fahrgeschwindigkeit ist Null und es ist eine Abwesenheit des Fahrers von einem Fahrersitz (16) feststellbar,
**dadurch gekennzeichnet, dass** in einer Zuführung zwischen der Federspeicherbremse (31) und den Bremsleitungen (26) eine Drosselstelle (32) vorgesehen ist, um bei Aktivieren der Parkbremseinrichtung (8), einen schnellen Druckabfall in dem Feststell-Bremskreis (27) und damit einen schlagartigen Bremsvorgang zu verhindern.

2. Arbeitsfahrzeug nach Anspruch 1, wobei
- zum Bestimmen, ob das Fahrpedal (2) betätigt oder nicht betätigt ist, eine Fahrpedalstellung-Erfassungseinrichtung vorgesehen ist, zum Erfassen der Stellung des Fahrpedals (2) in einer Ausgangsstellung und/oder zum Erfassen einer Änderung einer Stellung des Fahrpedals (2); und wobei
- die Fahrpedalstellung-Erfassungseinrichtung mit der Bremssteuerung (10) gekoppelt ist, zum Erzeugen eines Fahrpedalsignals (11), wenn eine Änderung der Fahrpedalstellung festgestellt wird.

3. Arbeitsfahrzeug nach einem der vorstehenden Ansprüche, wobei eine Geschwindigkeitsmesseinrichtung (12) zum Messen der Fahrgeschwindigkeit des Arbeitsfahrzeugs vorgesehen ist.

4. Arbeitsfahrzeug nach einem der vorstehenden Ansprüche, wobei
- die Geschwindigkeitsmesseinrichtung (12) mit der Bremssteuerung (10) gekoppelt ist, zum Übermitteln eines Geschwindigkeitssignals (13); und wobei
- die Bremssteuerung (10) ausgebildet ist zum Bestimmen,
+ ob die Fahrgeschwindigkeit des Arbeitsfahrzeugs unterhalb eines vorgegebenen Geschwindigkeitsgrenzwertes liegt; und/oder
+ ob die Fahrgeschwindigkeit Null ist; und/oder
+ ob die Fahrgeschwindigkeit zunächst Null ist und sich nachfolgend erhöht.

5. Arbeitsfahrzeug nach einem der vorstehenden Ansprüche, wobei
- der Fahrtrichtungsschalter (5) vorgesehen ist zum Einstellen von wenigstens drei Fahrtrichtungen "Vorwärts", "Rückwärts" und "Neutral";
- ein Fahrtrichtungs-Informationssignal (14) über die eingestellte Fahrtrichtung an die Bremssteuerung (10) übermittelbar ist.

6. Arbeitsfahrzeug nach einem der vorstehenden Ansprüche, wobei die Bremssteuerung (10) ausgebildet ist, um die Parkbremseinrichtung (8) zu lösen, wenn nach einer automatischen Aktivierung der Parkbremseinrichtung (8) durch die Bremssteuerung (10) eine Änderung der Fahrtrichtung durch den Fahrtrichtungsschalter (5) in Fahrtrichtung "Vorwärts" oder "Rückwärts" erkannt wird.

7. Arbeitsfahrzeug nach einem der vorstehenden Ansprüche, wobei ein Bremspedal (7) vorgesehen ist, zum Aktivieren der Betriebsbremse (6) durch den Fahrer.

8. Arbeitsfahrzeug nach einem der vorstehenden Ansprüche, wobei ein Fahrersitz vorgesehen ist, mit einer Sitzkontakteinrichtung zum Erkennen einer Abwesenheit des Fahrers von dem Fahrersitz.

9. Arbeitsfahrzeug nach einem der vorstehenden Ansprüche, wobei eine Parkbrems-Betätigungseinrichtung (9) für den Fahrer des Arbeitsfahrzeugs vorgesehen ist, zum Aktivieren und Lösen der Parkbremseinrichtung (8) durch eine Betätigungshandlung des Fahrers.

10. Arbeitsfahrzeug nach einem der vorstehenden Ansprüche, wobei die Bremssteuerung (10) ausgebildet ist, um eine durch den Fahrer mithilfe der Parkbrems-Betätigungseinrichtung (9) aktivierte Parkbremseinrichtung (8) nicht automatisch durch die Bremssteuerung (10) zu lösen.

11. Verfahren zum automatischen Aktivieren einer eine Federspeicherbremse (31) aufweisenden Parkbremseinrichtung (8) in einem Arbeitsfahrzeug, mit den Schritten:
- Überwachen von Bedingungen aufgrund von Zuständen des Arbeitsfahrzeugs und automatisches Aktivieren der Parkbremseinrichtung (8), wenn wenigstens eines der folgenden Bedingungen erfüllt ist:
- ein Fahrpedal (2) wird über einen vorbestimmten Inaktivitätszeitraum nicht betätigt und eine Fahrgeschwindigkeit des Arbeitsfahrzeugs liegt unterhalb eines vorgegebenen Geschwindigkeitsgrenzwertes;
- ein Fahrtrichtungsschalter (5) ist in eine Stellung "Neutral" eingelegt und die Fahrgeschwindigkeit liegt unterhalb eines vorgegebenen Geschwindigkeitsgrenzwertes ;
- die Fahrgeschwindigkeit ist Null und erhöht sich nachfolgend, ohne dass das Fahrpedal (2) betätigt wird;
- die Fahrgeschwindigkeit ist Null und eine Betriebsbremse (6) ist durch einen Fahrer aktiviert;
- die Fahrgeschwindigkeit ist Null und eine Abwesenheit des Fahrers von einem Fahrersitz (16) ist feststellbar;
**dadurch gekennzeichnet, dass**
die Federspeicherbremse (31) der Parkbremseinrichtung (8) über Bremsleitungen (26) eines Feststell-Bremskreises (27) hydraulisch gelöst wird, und, dass zwischen der Federspeicherbremse (31) und den Bremsleitungen (26) eine Drosselstelle (32) vorgesehen ist, um bei Aktivieren der Parkbremseinrichtung (8), einen schnellen Druckabfall in dem Feststell-Bremskreis (27) und damit einen schlagartigen Bremsvorgang zu verhindern.

## Claims

1. Working vehicle having a braking system, comprising
- a motor (1), of which the rotational speed can be varied via an accelerator pedal (2);
- a parking brake device (8) having at least one spring-loaded brake (31);
- a brake controller (10) for actuating the parking brake device (8);
and comprising
- a locking brake circuit (27) having brake lines (26), via which brake fluid under brake pressure is supplied to the parking brake device (8) in order to release the parking brake device (8);
wherein
- the brake controller (10) is configured to automatically activate the parking brake device (8) if at least one of the following conditions is met:
- the accelerator pedal (2) is not actuated over a predetermined period of inactivity and a travel speed of the working vehicle is below a specified speed limit value;
- a travel direction switch (5) is placed in a "neutral" position and the travel speed is below a specified speed limit value;
- the travel speed is zero and subsequently increases without the accelerator pedal (2) being actuated;
- the travel speed is zero and a service brake (6) is activated by a driver;
- the travel speed is zero and an absence of the driver from a driver's seat (16) can be established,
**characterised in that** a throttle point (32) is provided in a supply between the spring-loaded brake (31) and the brake lines (26) in order to prevent a rapid pressure drop in the locking brake circuit (27) and thus an abrupt braking procedure when the parking brake device (8) is activated.

2. Working vehicle as claimed in claim 1, wherein
- in order to determine whether the accelerator pedal (2) is actuated or not actuated, an accelerator pedal position detection device is provided for detecting the position of the accelerator pedal (2) in an initial position and/or for detecting a change in a position of the accelerator pedal (2); and wherein
- the accelerator pedal position detection device is coupled to the brake controller (10) in order to generate an accelerator pedal signal (11) when a change in the accelerator pedal position is established.

3. Working vehicle as claimed in any one of the preceding claims, wherein a speed measuring device (12) is provided for measuring the travel speed of the working vehicle.

4. Working vehicle as claimed in any one of the preceding claims, wherein
- the speed measuring device (12) is coupled to the brake controller (10) in order to communicate a speed signal (13); and wherein
- the brake controller (10) is configured to determine,
+ whether the travel speed of the working vehicle is below a specified speed limit value; and/or
+ whether the travel speed is zero; and/or
+ whether the travel speed is initially zero and subsequently increases.

5. Working vehicle as claimed in any one of the preceding claims, wherein
- the travel direction switch (5) is provided for setting at least three travel directions "forwards", "reverse" and "neutral";
- a travel direction information signal (14) regarding the set travel direction can be communicated to the brake controller (10).

6. Working vehicle as claimed in any one of the preceding claims, wherein the brake controller (10) is configured to release the parking brake device (8) if, after automatic activation of the parking brake device (8) by the brake controller (10), a change in the travel direction by the travel direction switch (5) to the travel direction "forwards" or "reverse" is recognised.

7. Working vehicle as claimed in any one of the preceding claims, wherein a brake pedal (7) is provided for activation of the service brake (6) by the driver.

8. Working vehicle as claimed in any one of the preceding claims, wherein a driver's seat is provided, having a seat contact device for recognising an absence of the driver from the driver's seat.

9. Working vehicle as claimed in any one of the preceding claims, wherein a parking brake actuation device (9) is provided for the driver of the working vehicle for activation and release of the parking brake device (8) by an actuating action of the driver.

10. Working vehicle as claimed in any one of the preceding claims, wherein the brake controller (10) is configured so as not to release a parking brake device (8) - activated by the driver with the aid of the parking brake actuation device (9) - automatically by means of the brake controller (10).

11. Method for automatically activating a parking brake device (8), which has a spring-loaded brake (31), in a working vehicle, comprising the steps of:
- monitoring conditions on the basis of states of the working vehicle and automatically activating the parking brake device (8) if at least one of the following conditions is met:
- an accelerator pedal (2) is not actuated over a predetermined period of inactivity and a travel speed of the working vehicle is below a specified speed limit value;
- a travel direction switch (5) is placed in a "neutral" position and the travel speed is below a specified speed limit value;
- the travel speed is zero and subsequently increases without the accelerator pedal (2) being actuated;
- the travel speed is zero and a service brake (6) is activated by a driver;
- the travel speed is zero and an absence of the driver from a driver's seat (16) can be established,
**characterised in that** the spring-loaded brake (31) of the parking brake device (8) is released hydraulically via brake lines (26) of a locking brake circuit (27) and **in that** a throttle point (32) is provided between the spring-loaded brake (31) and the brake lines (26) in order to prevent a rapid pressure drop in the locking brake circuit (27) and thus an abrupt braking procedure when the parking brake device (8) is activated.

## Revendications

1. Véhicule de travail avec un système de freinage avec
- un moteur (1) dont la vitesse de rotation peut être modifiée par l'intermédiaire d'une pédale (2) ;
- un dispositif de freinage de stationnement (8) avec au moins un frein à ressort (31) ;
- une commande de freinage (10) pour l'actionnement du dispositif de freinage de stationnement (8) ;
- un circuit de freinage de stationnement (27) avec des conduites de freinage (26) par l'intermédiaire desquelles le liquide de freinage sous pression de freinage est guidé vers le dispositif de freinage de stationnement (8) afin de relâcher le dispositif de freinage de stationnement (8) ;
dans lequel
- la commande de freinage (10) est conçue pour l'activation automatique du dispositif de freinage de stationnement (8) lorsqu'au moins une des conditions suivantes est respectée :
- la pédale (2) n'est pas actionnée pendant une période d'inactivité prédéterminée et une vitesse de déplacement du véhicule de travail se trouve en dessous d'une valeur limite de vitesse prédéterminée ;
- un commutateur de sens de marche (5) est enclenché dans une position « neutre » et la vitesse de déplacement se trouve en dessous d'une valeur limite de vitesse prédéterminée ;
- la vitesse de déplacement est nulle et augmente ensuite sans que la pédale (2) ne soit actionnée ;
- la vitesse de déplacement est nulle et un frein de service (6) est activé par un conducteur ;
- la vitesse de déplacement est nulle et une absence du conducteur du siège de conducteur (16) peut être constatée,
**caractérisé en ce que**, dans une alimentation entre le frein à ressort (31) et les conduites de freinage (26), est prévu un étranglement (32) afin d'empêcher, lors de l'activation du dispositif de freinage de stationnement (8), une chute rapide de la pression dans le circuit de freinage de stationnement (27) et donc un processus de freinage par à-coups.

2. Véhicule de travail selon la revendication 1, dans lequel
- pour la détermination si la pédale (2) est actionnée ou n'est pas actionnée, un dispositif de détection de position de pédale est prévu pour la détection de la position de la pédale (2) dans une position de départ et/ou pour la détection d'une modification d'une position de la pédale (2) ; et dans lequel
- le dispositif de détection de position de pédale est couplé avec la commande de freinage (10), pour la génération d'un signal de pédale (11), lorsqu'une modification de la position de pédale est constatée.

3. Véhicule de travail selon l'une des revendications précédentes, dans lequel un dispositif de mesure de vitesse (12) pour la mesure de la vitesse de déplacement du véhicule de travail.

4. Véhicule de travail selon l'une des revendications précédentes, dans lequel
- le dispositif de mesure de vitesse (12) est couplé avec la commande de freinage (10) pour la transmission d'un signal de vitesse (13) ; et dans lequel
- la commande de freinage (10) est conçue pour déterminer
- si la vitesse de déplacement du véhicule de travail se trouve en dessous d'une valeur limite de vitesse prédéterminée ; et/ou
- si la vitesse de déplacement est nulle ; et/ou
- si la vitesse de déplacement est d'abord nulle et augmente ensuite.

5. Véhicule de travail selon l'une des revendications précédentes, dans lequel
- le commutateur de sens de marche (5) est conçu pour le réglage d'au moins 3 sens de marche « vers l'avant », « vers l'arrière » et « neutre » ;
- un signal d'information de sens de marche (14) peut être transmis par l'intermédiaire du sens de marche réglé à la commande de freinage (10).

6. Véhicule de travail selon l'une des revendications précédentes, dans lequel la commande de freinage (10) est conçue pour relâcher le dispositif de freinage de stationnement (8) lorsque, après une activation automatique du dispositif de freinage de stationnement (8) par la commande de freinage (10), une modification du sens de la marche par le commutateur de sens de marche (5) dans le sens de marche « vers l'avant » ou « vers l'arrière » est détectée.

7. Véhicule de travail selon l'une des revendications précédentes, dans lequel une pédale de freinage (7) est conçu pour l'activation du frein de service (6) par le conducteur.

8. Véhicule de travail selon l'une des revendications précédentes, dans lequel un siège de conducteur est prévu avec un dispositif de contact de siège pour la détection d'une absence du conducteur sur le siège du conducteur.

9. Véhicule de travail selon l'une des revendications précédentes, dans lequel un dispositif d'actionnement de frein de stationnement (9) pour le conducteur du véhicule de travail est conçu pour l'activation et le relâchement du dispositif de freinage de stationnement (8) par un actionnement du conducteur.

10. Véhicule de travail selon l'une des revendications précédentes, dans lequel la commande de freinage (10) est conçue pour ne pas relâcher automatiquement un dispositif de freinage de stationnement (8) activé par le conducteur à l'aide du dispositif d'actionnement de frein de stationnement (9) par la commande de freinage (10).

11. Procédé d'activation automatique d'un dispositif de freinage de stationnement (8) comprenant un frein à ressort (31) dans un véhicule de travail, avec les étapes suivantes :
- surveillance de conditions sur la base d'états du véhicule de travail et activation automatique du dispositif de freinage de stationnement (8), lorsqu'au moins une des conditions suivantes est remplie :
- une pédale (2) n'est pas actionnée pendant une période d'inactivité prédéterminée et une vitesse de déplacement du véhicule de travail se trouve en dessous d'une valeur limite de vitesse prédéterminée ;
- un commutateur de sens de marche (5) est enclenché dans une position « neutre » et la vitesse de déplacement se trouve en dessous d'une valeur limite de vitesse prédéterminée ;
- la vitesse de déplacement est nulle et augmente ensuite sans que la pédale (2) ne soit actionnée ;
- la vitesse de déplacement est nulle et un frein de service (6) est activé par un conducteur ;
- la vitesse de déplacement est nulle et une absence du conducteur du siège de conducteur (16) peut être constatée,
**caractérisé en ce que** le frein à ressort (31) du dispositif de freinage de stationnement (8) est relâché hydrauliquement par l'intermédiaire de conduites de freinage (26) d'un circuit de freinage de stationnement (27) et **en ce que**, entre le frein à ressort (31) et les conduites de freinage (26), est prévu un étranglement (32) afin d'empêcher, lors de l'activation du dispositif de freinage de stationnement (8), une chute de pression rapide dans le circuit de freinage de stationnement (27) et donc un processus de freinage par à-coups.
